Europäisches Patentamt

European Patent Office

Office européen des brevets

(11) Veröffentlichungsnummer: **0 255 591 B1**

# EUROPÄISCHE PATENTSCHRIFT

(45) Veröffentlichungstag der Patentschrift: **14.08.91**

(51) Int. Cl.5: **B01D 27/08**

(21) Anmeldenummer: **87108695.5**

(22) Anmeldetag: **16.06.87**

(54) **Filtergehäuse.**

(30) Priorität: **19.07.86 DE 3624518**

(43) Veröffentlichungstag der Anmeldung:
**10.02.88 Patentblatt 88/06**

(45) Bekanntmachung des Hinweises auf die
Patenterteilung:
**14.08.91 Patentblatt 91/33**

(84) Benannte Vertragsstaaten:
**DE ES FR GB IT**

(56) Entgegenhaltungen:
**EP-A- 0 011 189      EP-A- 0 099 472
DE-A- 1 947 527      FR-A- 2 327 812
FR-A- 2 544 021      US-A- 1 896 395
US-A- 2 203 668**

(73) Patentinhaber: **KNECHT Filterwerke GmbH
Haldenstrasse 48
W-7000 Stuttgart 50(DE)**

(72) Erfinder: **Widmann, Sigbert
Schillerstrasse 27
W-7322 Donzdorf(DE)**
Erfinder: **Baumann, Peter
Spitalackerweg 4/A
W-7000 Stuttgart 80(DE)**

(74) Vertreter: **Pfusch, Volker, Dipl.-Ing.
MAHLE GMBH Patentabteilung Pragstrasse
26-46 Postfach 50 07 69
W-7000 Stuttgart 50(DE)**

## Beschreibung

Die Erfindung betrifft ein Filtergehäuse für ein insbesondere Kraftstoffleitungsfilter und insbesondere aus Aluminium nach dem Oberbegriff des Patentanspruchs.

Bei derartigen Filtergehäusen, wie sie z.B. aus EP 0 011 189 bekannt sind, liegt die Schweißnaht zwischen Abschlußscheibe und der Wand des topfförmigen Gehäusehauptteils jeweils am äußeren Umfang der Abschlußscheibe. Dadurch ist diese Schweißnaht radialen Verformungen der zylindrischen Wand des topfförmigen Gehäusehauptteiles jeweils direkt ausgesetzt. Das kann in extremen Fällen zu einem Reißen der Schweißnahtverbindung führen.

Hier mit einfachen Mitteln eine Verbesserung zu schaffen, ist die Hauptaufgabe der Erfindung. Ein weiteres Ziel der Erfindung besteht darin, die Schweißnahtverbindung auf wirtschaftlichere Weise herzustellen.

Gelöst werden diese Aufgaben durch eine Ausführung der Schweißnahtverbindung des Filtergehäuses entsprechend den kennzeichnenden Merkmalen des Patentanspruchs.

Dadurch, daß das topfförmige Gehäusehauptteil die Abflußscheibe radial außen umgreift, wirken sich radiale Verformungen der Gehäusewand nicht mehr direkt auf die Schweißnaht, die an der umfangsmäßig nach radial innen hineingezogenen Ringrippe der Abschlußscheibe anliegt, aus.

Um auch Verformungen in axialen Richtungen der Gehäusewand nicht direkt auf die Schweißnaht einwirken zu lassen, ist es zweckmäßig, die Gehäusewand auch an die in das Gehäuseinnere weisende Oberfläche der Abschlußscheibe formschlüssig einzupressen. Solche ringförmigen Einzüge sind an sich an dieser Stelle des Filtergehäuses bekannt und dienen in der Regel dazu, bei der Montage einen Anschlag für die Abschlußplatte zu schaffen.

Das Verlegen der Schweißnaht von dem äußeren Umfang der Abschlußscheibe an die weiter innen liegende Ringrippe hat in wirtschaftlicher Hinsicht den Vorteil, daß die Schweißnaht kürzer und damit kostengünstiger herstellbar ist wobei zusätzlich wegen der kürzeren Schweißnaht auch noch weniger Wärme durch das Schweißen in die Abschlußscheibe eingebracht werden muß.

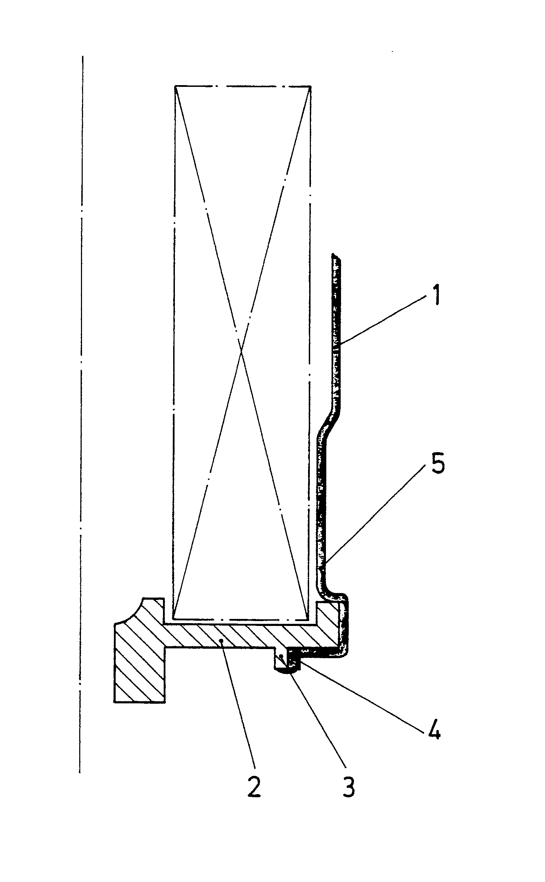

Ein Ausführungsbeispiel der Erfindung ist in der Zeichnung dargestellt, die im Längsschnitt den Ausschnitt des die Schweißnaht aufweisenden Filtergehäusebereichs zeigt.

Das Ende des topfförmigen Gehäusehauptteiles 1 umgreift die Abschlußscheibe 2. An der Abschlußscheibe 2 ist eine Ringrippe 3 in deutlichem Abstand von dem Außenumfang der Abschlußscheibe 2 angeformt. Das Gehäusehauptteil 1 ist in Form eines Kragens derart um die Abschlußscheibe 2 herumgeformt, daß es mit einem zylindrischen Ringsteg 4 direkt an den Außenumfang der Ringrippe 3 zu liegen kommt. Direkt aneinanderliegend können die Ringrippe 3 und der Ringsteg 4 auf einfache Weise axial miteinander verschweißt werden.

Um auch in axialer Richtung eine formschlüssige Verbindung zwischen Abschlußscheibe 2 und Gehäusehauptteil 1 zu erreichen, ist in das Gehäusehauptteil 1 eine ringförmige Einbuchtung 5 eingepreßt. Mit strichpunktierten Linien ist ein ringförmiges Filtermaterial angedeutet, daß in dem Filtergehäuse angeordnet werden kann.

## Patentansprüche

1. Filtergehäuse mit einem gepreßten, insbesondere fließgepreßten topfförmigen Gehäusehauptteil (1) und einer an das offene Ende des topfförmigen Hauptteils angeschweißten Abschlußscheibe (2), bei dem in den Stirnflächen Zu- und Abflußöffnungen angeordnet sind, **gekennzeichnet** durch die Merkmale

    (a) an der außen liegenden Oberfläche der Abschlußscheibe (2) ist mit Abstand zum Scheibenaußenumfang eine Ringrippe (3) angeformt,

    (b) die zylindrische Wand des Gehäusehauptteils (1) umgreift die Abschlußscheibe (2) in Form eines Kragens, wobei der Rand des Kragens einen zylindrischen Ringsteg (4) bildet, der an dem Außenumfang der Ringrippe (3) der Abschlußscheibe (2) anliegt und dort mit der Ringrippe (3) verschweißt ist.

2. Filtergehäuse nach Anspruch 1, dadurch gekennzeichnet, daß es aus Aluminium besteht.

3. Verwendung eines Filtergehäuses nach Anspruch 1 oder 2 für Kraftstoffleitungsfilter.

## Claims

1. A filter housing with a pressed, particularly flow-pressed cup-shaped main housing part (1 and a closure plate (2) welded on to the open end of the cup-shaped main part wherein inlet and outlet openings are provided in the front surfaces, characterized by the following characteristics:

    (a) an annular rib (3) is moulded on the externally lying surface of the closure plate (2) spaced from the outer periphery of the plate;

    (b) the cylindrical wall of the main housing part (1) surrounds the closure plate (2) in the manner of a collar, the edge of the collar forming a cylindrical annular web (4) applying on the outer periphery of the annular rib (3) of the closure plate (2) and being welded there to the annular rib (3).

2. A filter housing according to claim 1, characterized in that it is made of aluminium.

3. Utilization of a filter housing according to claim 1 or 2 for fuel duct filters.

**Revendications**

1. Boîtier filtrant avec une partie principale (1) en forme de pot façonnée à la presse, filée notamment, et avec une plaque de fermeture (2), soudée sur l'extrémité ouverte de la partie principale en forme de pot, sur lequel des orifices d'admission et d'évacuation sont disposés sur les faces frontales, caractérisé en ce qu'une nervure annulaire (3) est formée sur la surface externe de la plaque de fermeture (2), à une certaine distance du pourtour externe de cette dernière, et en ce que la paroi cylindrique de la partie principale du boîtier (1) enserre la plaque de fermeture (2) en forme de collerette, le bord de la collerette formant un profil annulaire cylindrique (4), qui s'applique sur le pourtour externe de la nervure annulaire (3) de la plaque de fermeture (2), où il est soudé avec la nervure annulaire (3).

2. Boîtier filtrant suivant la revendication 1, caractérisé en ce qu'il se compose d'aluminium.

3. Utilisation d'un boîtier filtrant suivant l'une des revendications 1 et 2 pour un filtre à carburant.